# EUROPEAN PATENT APPLICATION

(11) **EP 4 746 212 A1**
(43) Date of publication of application: **20.05.2026**
(21) Application number: 25815323.8
(22) Date of filing: 26.05.2025
(51) Int. Cl.: H01R 13/502, H01R 12/71

(54) **CARD SOCKET AND ELECTRONIC DEVICE**

(30) Priority: 31.05.2024 CN 202410703969
(71) Applicant: Huawei Technologies Co., Ltd., Shenzhen, Guangdong 518129 (CN)
(72) Inventor: SHAN, Xiliang, Shenzhen, Guangdong 518129 (CN); GUO, Zhiyue, Shenzhen, Guangdong 518129 (CN); SU, Tien Chieh, Shenzhen, Guangdong 518129 (CN)
(74) Representative: Isarpatent
(86) International application number: PCT/CN2025/097097
(87) International publication number: WO 2025/247136

(57) **Abstract**

The present disclosure relates to a card socket and an electronic device. The card socket includes a housing, a card connector, a card tray, and a clamping mechanism. **In** embodiments of the present disclosure, an extension direction of a short side of a card slot is the same as an insertion direction of the card tray, allowing an electronic card to be horizontally inserted, thereby facilitating miniaturization of the card socket. In embodiments of the present disclosure, a first clamping member and the housing are of a separate structure, and the first clamping member is fastened to the housing through assembly, allowing a size of the first clamping member to be adjusted as required, enhancing flexibility.

## Description

This application claims priority to Chinese Patent Application No. 202410703969.9, filed with the China National Intellectual Property Administration on May 31, 2024 and entitled "CARD SOCKET AND ELECTRONIC DEVICE", which is incorporated herein by reference in its entirety.

### TECHNICAL FIELD

The present disclosure relates to the field of electronic product technologies, and in particular, to a card socket and an electronic device.

### BACKGROUND

The development of electronic devices has changed our lifestyle. In particular, the development of tablets, mobile phones, and the like has brought great convenience to our lives. Electronic devices are typically provided with a card socket, designed to accommodate electronic cards, thereby implementing functions of communication and storage of the electronic device and the like. The card socket is provided with a card tray, on which the electronic card is mounted. In the card socket, a clamping mechanism is used to clamp the card tray. However, if clamping force applied to the card tray by the clamping mechanism is too strong, it can make insertion and removal of the card tray difficult, and also cause severe material wear of the clamping mechanism.

### SUMMARY

Embodiments of the present disclosure provide a card socket and an electronic device. In the present disclosure, a structure of the card socket is properly designed, to achieve miniaturization of the card socket, and avoid problems such as difficulty in inserting and removing a card tray due to excessive clamping force applied to the card tray by a clamping mechanism as well as severe material wear of the clamping mechanism.

According to a first aspect, an embodiment of the present disclosure provides a card socket. The card socket is applied to an electronic device, and the electronic device includes an electronic card. The card socket includes a housing, a card connector, a card tray, and a clamping mechanism. The card tray is insertable into or removable from the housing. The card tray is provided with a card slot. An extension direction of a short side of the card slot is the same as an insertion direction of the card tray. The electronic card is located within the card slot. A material of the housing may be metal, for example, iron, copper, or aluminum.

It may be understood that the extension direction of the short side of the card slot is the same as the insertion direction of the card tray, so that the electronic card can be horizontally inserted into the card socket. That the electronic card is horizontally inserted into the card socket, so that a size of the card socket in the insertion direction is reduced, miniaturization of the overall card socket is facilitated, and space occupied by the card socket in the electronic device is reduced. In this way, sufficient space for disposing a battery and the like in the electronic device is reserved, and space utilization of the electronic device is improved.

The card connector is located within the housing. The card connector includes an insulating member and terminals. The terminal includes a fastening portion, at least two spring arms, and a contact portion. The fastening portion is fastened to the insulating member. The contact portion is spaced apart from the fastening portion. The at least two spring arms are fastened between the fastening portion and the contact portion. Arrangement directions of the at least two spring arms are set at included angles with an arrangement direction of the fastening portion and the contact portion. When the card tray is located within the housing, the contact portion is disposed in correspondence to the card slot. There may be two, three, four, five, or more spring arms, and a plurality of spring arms may be disposed side by side on a same side of the contact portion. The terminal may be of an integrally formed structure, which is conducive to simplifying a manufacturing process and provides high structural strength. In another embodiment of the present disclosure, a plurality of mechanical parts of the terminal may alternatively be of a separate structure and are fastened through assembly to form the terminal. The insulating member may be made of plastic or another material. The insulating member serves to insulate a plurality of terminals from each other, and insulate the terminals from other mechanical parts that do not need to be electrically connected. In this embodiment of the present disclosure, structural strength and stability of the terminal can be enhanced by increasing a quantity of spring arms, which facilitates a stable electrical connection between the terminal and the electronic card.

The clamping mechanism includes a first clamping member and a second clamping member that are disposed opposite to each other in a first direction. The first direction is set at an included angle with the insertion direction. When the card tray is inserted into the housing, the card tray is located between the first clamping member and the second clamping member. The first clamping member and the housing are of a separate structure. The first clamping member is fastened to the housing through assembly. For example, the first clamping member may be fastened to the housing through assembly such as welding or adhesive. The first direction may be perpendicular to the insertion direction.

It may be understood that when the electronic card can be horizontally inserted into the card socket, a size of the housing in the insertion direction is small. As a result, a size of the first clamping member and a size of the second clamping member in the insertion direction are small. If the first clamping member is integrally formed with the housing, the size of the first clamping member is further limited by some structures on the housing, and the size is difficult to be large. Excessively small sizes of the first clamping member and the second clamping member in the insertion direction lead to excessive clamping force of the first clamping member and the second clamping member on the card tray. As a result, it is difficult to insert the card tray into the housing, or it is difficult to remove the card tray from the housing. In addition, in a process in which the card tray is removed from or inserted into the card socket, the first clamping member and the second clamping member deform. Excessively small sizes of the first clamping member and the second clamping member lead to severe material wear of the first clamping member and the second clamping member during repeated removal or insertion of the card tray. As a result, life spans of the first clamping member and the second clamping member is reduced.

In an embodiment of the present disclosure, the first clamping member and the housing are disposed to be of a separate structure. The size of the first clamping member is not limited by some structures on the housing, and the size of the first clamping member in the insertion direction may be long. This avoids excessive clamping force of the first clamping member on the card tray, and avoids difficulty in movement of the card tray and severe material wear of the first clamping member. In this embodiment of the present disclosure, the first clamping member and the housing are disposed to be of a separate structure, so that a size, a thickness, a material, and the like of the first clamping member are set with high flexibility.

In an embodiment of the present disclosure, the first clamping member includes an installation portion, a first connection portion, a second connection portion, and a clamping portion. The installation portion is spaced apart from the clamping portion. The installation portion is fastened to the housing. The clamping portion is configured to clamp the card tray. The first connection portion is connected to one end of the installation portion and one end of the clamping portion. The second connection portion is connected to another end of the installation portion and another end of the clamping portion. A distance between the first connection portion and the second connection portion is greater than or equal to 4 mm. For example, the distance between the first connection portion and the second connection portion may be 4.5 mm, 5 mm, 5.5 mm, 6 mm, 6.5 mm, 7 mm, 8 mm, or the like, which may be specifically set as required. In this embodiment of the present disclosure, the distance between the first connection portion and the second connection portion is greater than or equal to 4 mm, so that the size of the first clamping member in the insertion direction can be ensured. This prevents the first clamping member from exerting excessive clamping force on the card tray due to an overly small size of the first clamping member in the insertion direction, where the excessive clamping force would make the card tray difficult to remove from the housing or insert into the housing. In addition, the distance between the first connection portion and the second connection portion is greater than or equal to 4 mm, avoiding severe material wear of the first clamping member during repeated removal or insertion of the card tray due to the overly small size of the first clamping member, thereby avoiding reducing a life span of the first clamping member.

In an embodiment of the present disclosure, the installation portion is bent relative to the clamping portion and toward one side of the clamping portion. In this embodiment of the present disclosure, the installation portion is bent relative to the clamping portion and toward one side of the clamping portion, so that space occupied by the first clamping member on a thickness of the card socket can be reduced, and miniaturization of the card socket is facilitated.

In an embodiment of the present disclosure,, the installation portion is provided with a first positioning portion. The housing is provided with a second positioning portion. The first positioning portion and the second positioning portion cooperate with each other. The first positioning portion and the second positioning portion cooperate with each other, so that the first clamping member is quickly and accurately fastened to the housing. There may be one first positioning portion or a plurality of first positioning portions, and there may also be one second positioning portion or a plurality of second positioning portions, where a plurality of may be understood as two or more. When there are a plurality of first positioning portions, the plurality of first positioning portions are spaced apart. The plurality of first positioning portions may be of structures with different sizes or different shapes, to implement positioning of the first clamping member and the housing, so as to avoid an error generated during the positioning of the first clamping member and the housing, and facilitate direct and accurate positioning.

In an embodiment of the present disclosure, the first positioning portion is a protrusion, and the second positioning portion is a groove or an opening. Alternatively, the first positioning portion is a groove or an opening, the second positioning portion is a protrusion. The protrusion is located within the groove or the opening. The protrusion and the groove or the opening cooperate with each other, so that the first clamping member is quickly and accurately fastened to the housing. It may be understood that the protrusion may be a protruding point, a protruding post, a conical protrusion, or the like.

In an embodiment of the present disclosure, a cross section of the protrusion that is perpendicular to a protrusion direction is of an asymmetric structure, for example, a polygon with unequal side lengths, so that the first clamping member can be connected to the housing only at a fixed angle, to avoid inaccurate positioning.

In an embodiment of the present disclosure, the card socket includes a push rod. The push rod is slidably connected to the housing. The push rod is configured to push the card tray out of the housing. When the card tray is inserted into the housing, the first clamping member and the push rod are located on a same side of the card tray, and the first clamping member is located on a side that is of the push rod and that faces the card tray. Because the first clamping member and the push rod are located on the same side of the card tray, if the first clamping member is integrally formed with the housing, the size of the first clamping member is further limited by a structure that is on the housing and that is used to connect the push rod, and the size is difficult to be large. In this embodiment of the present disclosure, the first clamping member and the housing are of a separate structure. The size of the first clamping member is not limited by the structure that is on the housing and that is used to connect the push rod, and the size of the first clamping member in the insertion direction may be long. This avoids excessive clamping force of the first clamping member on the card tray, and avoids difficulty in movement of the card tray and severe material wear of the first clamping member.

In an embodiment of the present disclosure, the housing includes a bending portion. The push rod is located within a track formed by the bending portion. The bending portion includes a first end portion and a second end portion that are disposed opposite to each other along the insertion direction. There is a hollow between the first end portion and the second end portion. A surface that is of the first connection portion and that faces the second connection portion is flush with a surface that is of the first end portion and that faces the second end portion, or a surface that is of the second connection portion and that faces the first connection portion is flush with a surface that is of the second end portion and that faces the first end portion. It may be understood that the first clamping member and the housing are of a separate structure, and the size of the first clamping member is not limited by a structure (a bending portion) that is on the housing and that is used to connect the push rod. In this embodiment of the present disclosure, the surface that is of the first connection portion and that faces the second connection portion is flush with the surface that is of the first end portion and that faces the second end portion, or the surface that is of the second connection portion and that faces the first connection portion is flush with the surface that is of the second end portion and that faces the first end portion, to ensure that the size of the first clamping member in the insertion direction can be large.

In an embodiment of the present disclosure, the second clamping member and the housing are of a separate structure, and the second clamping member is fastened to the housing through assembly. For example, the second clamping member may be fastened to the housing through assembly such as welding or adhesive. In this embodiment of the present disclosure, the second clamping member and the housing are of a separate structure, so that a size, a thickness, and a material of the second clamping member are set with high flexibility. In another embodiment of the present disclosure, the second clamping member and the housing may be of an integrally formed structure, and do not need to be fastened. This helps simplify a process, and also helps improve structural strength and stability of the second clamping member and the housing.

In an embodiment of the present disclosure, a contact part between a clamping portion of the second clamping member and the card tray is a second part. A contact part between the clamping portion of the first clamping member and the card tray is a first part. A direction of a connection line between the first part and the second part is parallel to a direction of a long side of the card slot. In this embodiment of the present disclosure, the direction of the connection line between the first part and the second part is parallel to the direction of the long side of the card slot, to ensure that even clamping force is applied to two sides of the card tray, and avoid instability of the card tray in the card socket caused by uneven force on the two sides of the card tray.

In an embodiment of the present disclosure, a size of the second clamping member in the insertion direction is the same as the size of the first clamping member in the insertion direction, to ensure that even clamping force is applied to two sides of the card tray, and avoid instability of the card tray in the card socket caused by uneven force on the two sides of the card tray. The size of the second clamping member is not limited by a structure that is on the housing and that is used to connect the push rod, and the size is highly flexible. In another embodiment, the size of the second clamping member in the insertion direction may alternatively be different from the size of the first clamping member in the insertion direction. This is not limited in embodiments of the present disclosure.

In an embodiment of the present disclosure, a main body portion of the terminal includes the at least two spring arms and the contact portion. The main body portion protrudes relative to a surface of the fastening portion. An outer side edge of the main body portion is bent toward a direction opposite to a protruding direction of the main body portion. **In** this embodiment of the present disclosure, the outer side edge of the main body portion is bent toward the direction opposite to the protruding direction of the main body portion, to avoid damaging the electronic card by an outer side edge of the terminal during insertion or removal of the electronic card. It may be understood that a surface of the main body portion facing the electronic card may be a smooth curved surface, to prevent the terminal from damaging the electronic card.

In an embodiment of the present disclosure, there are two card connectors. The two card connectors are disposed opposite to each other and spaced apart along a second direction to form a slot. The second direction is set at an included angle with the insertion direction and is set at an included angle with the first direction. There are two card slots. The two card slots are arranged along the second direction. When the card tray is located within the slot, terminals of one of the card connectors are disposed in correspondence to one of the card slots. Terminals of the other card connector are disposed in correspondence to the other card slot. In this embodiment of the present disclosure, there are two disposed card connectors, and there are two card slots, that is, there are two electronic cards. The two electronic cards are arranged in a stacked manner in the second direction, and are horizontally inserted. This helps reduce an overall size of the card socket, prevents the card socket from occupying excessively large space in the electronic device, and improves integration of the card socket.

In an embodiment of the present disclosure, the first clamping member is fastened to a bottom plate of the housing through assembly. One of the card connectors is fastened to the bottom plate. The insulating member is partially disposed between the terminals of the card connector fastened to the bottom plate and the bottom plate. In a process of forming the insulating member through injection molding, the terminals and the housing are used as inserts and are integrally formed with the insulating member. In this embodiment of the present disclosure, the terminals of the card connector fastened to the housing and the housing are formed into an integral mechanical part through an insert molding process. This simplifies an assembly process of the insulating member, the terminals, and the housing, improves connection strength between the insulating member, the terminal, and the housing, and enhances structural stability of the card socket. In addition, if the insulating member and the housing are of a separate structure and are fastened through assembly such as adhesive or welding, there is a gap between the insulating member and the housing, and dust or other impurities may enter the gap. In this embodiment of the present disclosure, the terminals of the card connector fastened to the housing, the insulating member, and the housing are formed into the integral mechanical part through the insert molding process, so that there is no gap between the insulating member and the housing, to avoid a foreign matter between the insulating member and the housing.

In an embodiment of the present disclosure, the insulating member of the card connector fastened to the bottom plate is provided with a recess portion, and the first clamping member is provided with a raised portion. Alternatively, the insulating member of the card connector fastened to the bottom plate is provided with a raised portion, and the first clamping member is provided with a recess portion. The raised portion is in the recess portion. It may be understood that during insertion or removal of the card tray, the first clamping member is subject to force of the card tray on the first clamping member along the insertion direction. Therefore, due to insertions or removals of the card tray, connection strength between the first clamping member and the housing may be reduced, and the first clamping member may be detached from the housing. In this embodiment of the present disclosure, the raised portion is located within the recess portion, so that the insulating member can limit and support the first clamping member, to prevent the first clamping member from being detached from the housing due to insertions or removals of the card tray.

In an embodiment of the present disclosure, the first clamping member is partially located between the bottom plate and the insulating member of the card connector fastened to the bottom plate. In this embodiment of the present disclosure, the first clamping member is partially located between the bottom plate and the insulating member of the card connector fastened to the bottom plate, so that the insulating member can limit and support the first clamping member, to prevent the first clamping member from being detached from the housing due to insertions or removals of the card tray.

In an embodiment of the present disclosure, the housing is provided with a bridge. The bridge includes an embedded portion and a first end portion and a second end portion that are disposed opposite to each other. The embedded portion is located between the first end portion and the second end portion. The first end portion and the second end portion are both fastened to the bottom plate. A gap is provided between the embedded portion and the bottom plate. The embedded portion is embedded into the insulating member of the card connector fastened to the bottom plate. In this embodiment of the present disclosure, the embedded portion is embedded into the insulating member of the card connector fastened to the bottom plate, which helps enhance connection strength between the insulating member fastened to the housing and the housing, and improve connection reliability.

In an embodiment of the present disclosure, the bottom plate is provided with a reinforcement hole or a reinforcement slot. The insulating member of the card connector fastened to the bottom plate includes an insulating body and an extension portion. The insulating body is fastened to a surface of the bottom plate. The extension portion is embedded into the reinforcement hole or the reinforcement slot. In this embodiment of the present disclosure, the extension portion is embedded into the inner wall of the reinforcement hole, so that the insulating member is reliably connected to the housing.

In an embodiment of the present disclosure, a main body portion of the terminal includes the at least two spring arms and the contact portion. The housing includes a hollow region. The main body portion is disposed in correspondence to the hollow portion. One of the card connectors is fastened to the bottom plate of the housing. That the main body portion of the terminal is disposed in correspondence to the hollow region may be understood as that a projection of the main body portion of the terminal on a plane on which the bottom plate of the housing lies is located within the hollow region. In a process in which the card tray is inserted into the housing, the card tray exerts, in a direction toward the bottom plate, action force on the terminal, the main body portion of the terminal deforms and approaches the bottom plate, and a short circuit is caused by contact between the main body portion of the terminal and the housing made of a metal material. In this embodiment of the present disclosure, the hollow region is provided, so that when the terminal is subjected to the action force in the direction toward the bottom plate, the terminal does not contact the housing, to avoid the short circuit caused by the contact between the terminal and the housing when the card tray is inserted. In addition, the hollow region is provided to reduce a weight of the housing, which facilitates a lightweight design of the card socket.

According to a second aspect, the present disclosure provides an electronic device, including a circuit board and the card socket according to any one of the foregoing embodiments. The card socket is fastened to the circuit board. The card slot is configured to install an electronic card. The terminals are electrically connected to the electronic card and the circuit board. The electronic device may be a mobile phone, a tablet computer, or another device. The electronic device may be a bar-type device, a foldable device, or the like. The bar-type device may be understood as a device that cannot be folded. The electronic card may be a data card, a subscriber identity module (Subscriber Identity Module, SIM), a nano memory card (Nano Memory Card, NM), or the like. This is not limited in embodiments of the present disclosure.

In an embodiment of the present disclosure, the electronic device includes an enclosure. The circuit board and the card socket are both located within the enclosure. A short side of the enclosure is provided with an opening. The opening is for the card tray to extend out of the enclosure. In another embodiment, the opening that is on the enclosure and that is for removal of the electronic card from the electronic device or extension of the electronic card into the electronic device may alternatively be provided on a long side of the enclosure. This is not limited in embodiments of the present disclosure, and may be provided as required.

In an embodiment of the present disclosure, the electronic card can be horizontally inserted into the card socket, so that a size of the card socket in an insertion direction is reduced, and miniaturization of the overall card socket is facilitated. In this embodiment of the present disclosure, there are at least two spring arms, to enhance structural stability of the terminal. In an embodiment of the present disclosure, the first clamping member and the housing are of a separate structure. A size of the first clamping member is set with high flexibility, and the size of the first clamping member in the insertion direction may be long. This avoids excessive clamping force of the first clamping member on the card tray, and avoids difficulty in movement of the card tray and severe material wear of the first clamping member.

### BRIEF DESCRIPTION OF DRAWINGS

To describe the technical solutions in embodiments of the present disclosure or in the background more clearly, the following briefly describes the accompanying drawings for describing embodiments of the present disclosure or the background.
FIG. 1 is a diagram of a structure of an electronic device according to an embodiment of the present disclosure;
FIG. 2 is a diagram of a structure of a card socket and an electronic card shown in FIG. 1;
FIG. 3 is a diagram of the structure of the card socket and the electronic card shown in FIG. 2 from another perspective;
FIG. 4 is a diagram of an exploded structure of the card socket and the electronic card shown in FIG. 3;
FIG. 5 is a diagram of a structure of a terminal shown in FIG. 4;
FIG. 6 is a diagram of a structure of a card connector shown in FIG. 4;
FIG. 7 is a diagram of a part of a structure of the card socket shown in FIG. 4;
FIG. 8 is a diagram of the part of the structure of the card socket shown in FIG. 7 from another perspective;
FIG. 9 is a diagram of a structure of a first clamping member shown in FIG. 7;
FIG. 10 is a diagram of an exploded structure of the part of the structure of the card socket shown in FIG. 7;
FIG. 11 is a diagram of another structure of a card socket and an electronic card according to an embodiment of the present disclosure;
FIG. 12 is a diagram of the structure of the card socket and the electronic card shown in FIG. 11 from another perspective;
FIG. 13 is a diagram of an exploded structure of the card socket and the electronic card shown in FIG. 12;
FIG. 14 is a diagram of a part of a structure of the card socket shown in FIG. 12;
FIG. 15 is a sectional view of the part of the structure of the card socket shown in FIG. 14 at an X-X position;
FIG. 16 is a diagram of another structure of a terminal according to an embodiment of the present disclosure; and
FIG. 17 is a diagram of a part of a structure of the card socket shown in FIG. 13.

### DESCRIPTION OF EMBODIMENTS

The following clearly and completely describes the technical solutions in embodiments of the present disclosure with reference to the accompanying drawings in embodiments of the present disclosure. Apparently, the described embodiments are merely some rather than all of embodiments of the present disclosure. All other embodiments obtained by a person of ordinary skill in the art based on embodiments of the present disclosure without creative efforts shall fall within the protection scope of the present disclosure.

It should be understood that "first", "second", and the like used in the present disclosure are merely used for distinguishing and description, but cannot be understood as an indication or implication of relative importance or an indication or implication of a sequence.

In descriptions of the present disclosure, orientations or position relationships indicated by terms "up", "down", "left", "right", and the like are based on orientations or position relationships shown in the accompanying drawings, and are used only for ease and brevity of description of the present disclosure, rather than indicating or implying that a specified apparatus or element needs to have a specific orientation or needs to be constructed and operated in a specific orientation. Therefore, such terms cannot be understood as a limitation on the present disclosure.

In the descriptions of the present disclosure, it should be noted that unless otherwise clearly specified and defined, the term "connection" should be understood in a broad sense, for example, may be a fastened connection, may be a detachable connection, or may further be an abutting connection or an integrated connection. A person of ordinary skill in the art may understand specific meanings of the foregoing terms in the present disclosure according to specific cases.

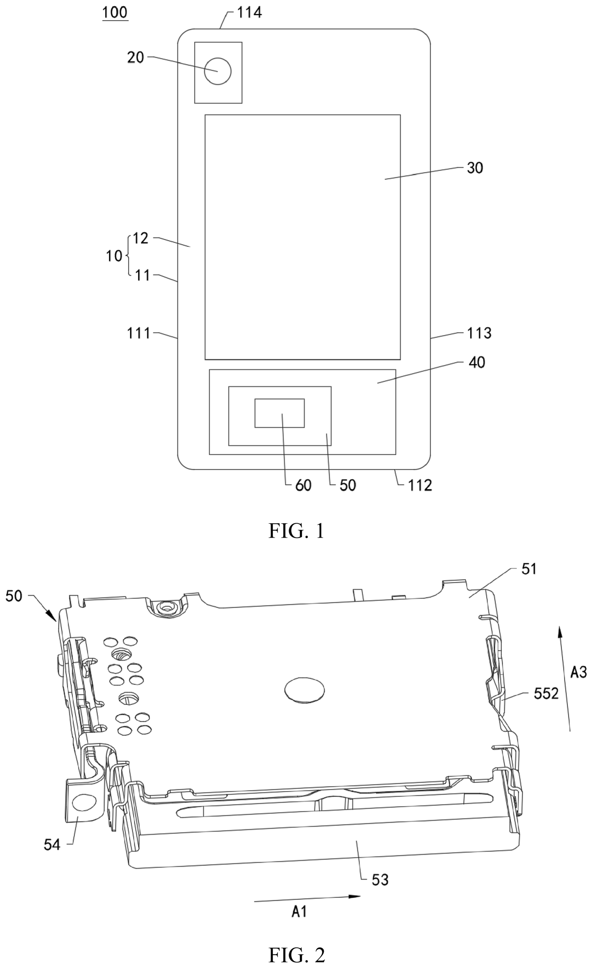

FIG. 1 is a diagram of a structure of an electronic device 100. The electronic device 100 may be a mobile phone, a tablet computer, or another device. The electronic device 100 may be a bar-type device, a foldable device, or the like. The bar-type device may be understood as a device that cannot be folded. In embodiments of the present disclosure, an example in which the electronic device 100 is a bar-type mobile phone is used for description.

The electronic device 100 may include an enclosure 10, a display (not shown in FIG. 1), a camera module 20, a battery 30, a circuit board 40, and a card socket 50. An electronic card 60 may be installed in the card socket 50 of the electronic device 100, to implement functions such as communication and storage of the electronic device 100. The enclosure 10 may include a frame 11 and a rear cover 12. The rear cover 12 and the frame 11 may be of an integrally formed structure, or may be of a separate structure and form an integrated structure in an assembly manner (for example, a fastened connection through adhesive). The display and the rear cover 12 are respectively installed on two sides of the frame 11, and jointly enclose an inner cavity that is of the entire device and that is for installing the camera module 20, the battery 30, the circuit board 40, the card socket 50, the electronic card 60, or another mechanical part. The display may be configured to display an image, to meet a use requirement of a user.

The camera module 20 may be disposed on the rear cover 12 and used as a rear-facing camera of the electronic device 100. The rear cover 12 may be provided with an opening, and the camera module 20 collects light through the opening of the rear cover 12 to implement image or video photography. For example, the rear cover 12 may include a light transmission lens element, and the light transmission lens element is installed in the opening of the rear cover 12, to allow light to pass through, and can be dustproof and waterproof. In some other embodiments, the camera module 20 may be used as a front-facing camera of the electronic device 100.

The battery 30 may supply power to the electronic device 100. The battery 30 may be a lithium battery, a nickel-hydrogen battery, or the like. A size of the battery 30 affects a capacity of the battery 30. A larger size of the battery 30 indicates a larger capacity of the battery 30 and longer power supply duration of the electronic device 100. The battery 30 may be of a square, a circle, an abnormal shape, or the like. This is not limited in embodiments of the present disclosure.

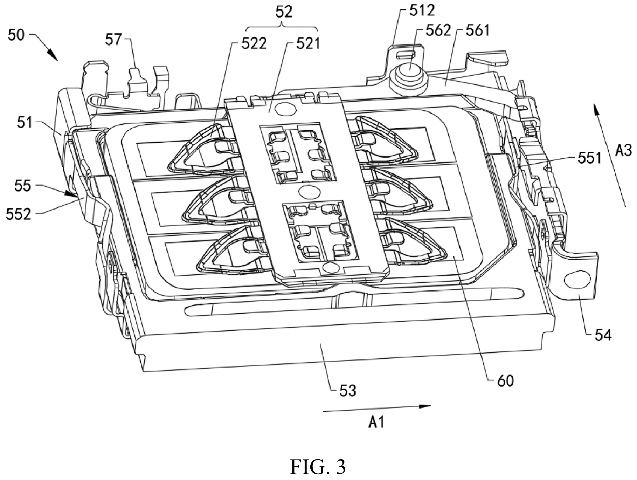

The card socket 50 is fastened to the circuit board 40. The card socket 50 includes a card tray 53 (not shown in FIG. 1, and with reference to FIG. 3). The electronic card 60 may be installed on the card tray 53, or the electronic card 60 may be removed from the card tray 53. The electronic card 60 can be accommodated in the card socket 50, or the electronic card 60 may be removed from the card socket 50.

For example, the frame 11 of the enclosure 10 may be provided with an opening (not shown in FIG. 1), and the card tray 53 can extend out of or extend into the frame 11 through the opening, to be specific, the electronic card 60 can extend out of the frame 11 or extend into the frame 11 through the opening. In some embodiments, the frame 11 may include a first side 111, a second side 112, a third side 113, and a fourth side 114 that are connected in sequence. The first side 111 and the third side 113 are disposed opposite to each other. A length of the first side 111 may be the same as a length of the third side 113. The second side 112 and the fourth side 114 are disposed opposite to each other. A length of the second side 112 may be the same as a length of the fourth side 114. The length of the first side 111 is greater than the length of the second side 112, the first side 111 is a long side of the electronic device 100, and the second side 112 is a short side of the electronic device 100. The fourth side 114 is located at the top of the electronic device 100, and the second side 112 is located at the bottom of the electronic device 100. The opening of the frame 11 may be provided on the second side 112, to be specific, on the bottom of the electronic device 100, the electronic card 60 may be removed from the card tray 53 or installed on the card tray 53. The second side 112 may further be provided with an opening for insertion of a charging plug, an opening corresponding to a speaker, and the like. In an embodiment of the present disclosure, the opening for removal or installation of the electronic card 60 is provided at the bottom of the electronic device 100, which facilitates centralized distribution of the openings of the electronic device 100 and improves aesthetic appearance of the electronic device 100.

In another embodiment, the opening that is on the frame 11 and that is for removal of the electronic card 60 from the electronic device 100 or extension of the electronic card 60 into the electronic device 100 may alternatively be provided on the first side 111, the third side 113, the fourth side 114, or the like. This is not limited in embodiments of the present disclosure, and may be provided as required.

In some embodiments, the electronic card 60 may be a data card, a subscriber identity module (Subscriber Identity Module, SIM), a nano memory card (Nano Memory Card, NM), or the like. This is not limited in embodiments of the present disclosure.

The electronic device 100 in FIG. 1 is merely an example. A size and a shape of the electronic device 100, and sizes, shapes, installation positions, and the like of the camera module 20, the battery 30, the circuit board 40, the card socket 50, and the electronic card 60 may be set as required. A specific structure of the electronic device 100 is not limited in embodiments of the present disclosure.

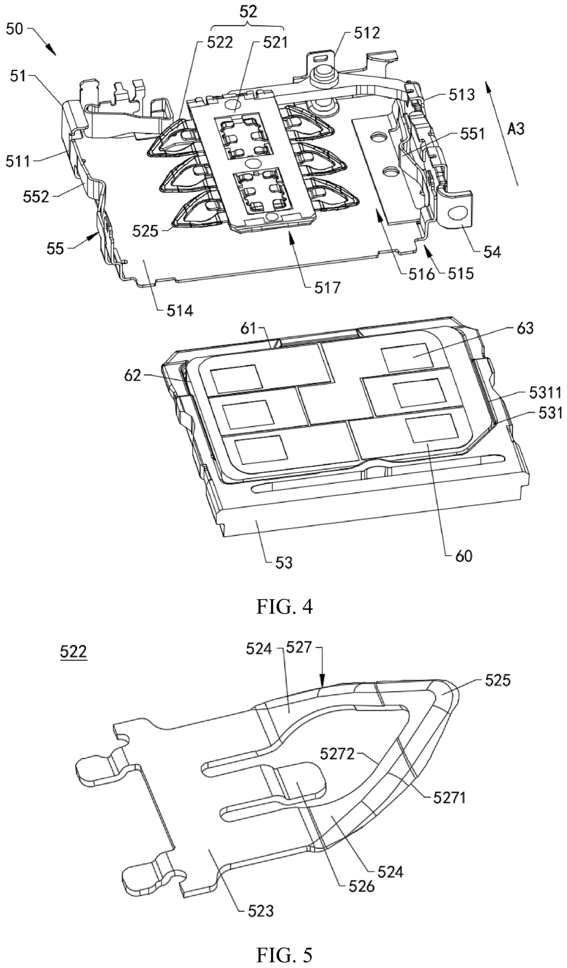

FIG. 2 is a diagram of a structure of a card socket 50 and an electronic card 60 shown in FIG. 1, FIG. 3 is a diagram of the structure of the card socket 50 and the electronic card 60 shown in FIG. 2 from another perspective, and FIG. 4 is a diagram of an exploded structure of the card socket 50 and the electronic card 60 shown in FIG. 3.

The card socket 50 may include a housing 51, a card connector 52, a card tray 53, and a clamping mechanism 55. The housing 51 may include a first side portion 511, a second side portion 512, a third side portion 513, a bottom plate 514, and an opening side 515. The first side portion 511, the second side portion 512, and the third side portion 513 are disposed around an edge of the bottom plate 514 in sequence, to form an accommodating cavity 516. The first side portion 511 and the third side portion 513 are disposed opposite to each other. The opening side 515 and the second side portion 512 are disposed opposite to each other. The card tray 53 can be removed from the housing 51 or inserted into the housing 51 through the opening side 515.

In some embodiments, a length of the first side portion 511 may be the same as a length of the third side portion 513, and both the length of the first side portion 511 and the length of the third side portion 513 may be less than a length of the second side portion 512. It may be understood that the lengths of the first side portion 511, the second side portion 512, and the third side portion 513 may be designed as required. The lengths of the first side portion 511, the second side portion 512, and the third side portion 513 are not limited in this embodiment of the present disclosure.

A material of the housing 51 may be metal, for example, iron, copper, or aluminum. The housing 51 may have a shielding function. The housing 51 may be configured to shield interference of an external signal to a signal of the electronic card 60, and can also avoid interference of the signal of the electronic card 60 to another signal of the electronic device 100. The housing 51 can further improve overall structural strength of the card socket 50.

The card connector 52 is located within the housing 51. The card connector 52 may be spaced apart from the bottom plate 514 of the housing 51. A first slot 517 is formed between the card connector 52 and the bottom plate 514 of the housing 51. The first slot 517 is configured to accommodate the card tray 53. In other words, the card tray 53 may be located within the first slot 517. It may be understood that the first slot 517 may be a part of the accommodating cavity 516.

The card connector 52 may include an insulating member 521 and terminals 522 that are fastened to each other. The insulating member 521 may be made of plastic or another material. The insulating member 521 can serve to insulate a plurality of terminals 522 (where in FIG. 3, an example in which there are six terminals 522 is used) from each other, and serve to insulate the terminals 522 from other mechanical parts that do not need to be electrically connected. For example, the insulating member 521 may insulate the terminals 522 from the metal housing 51.

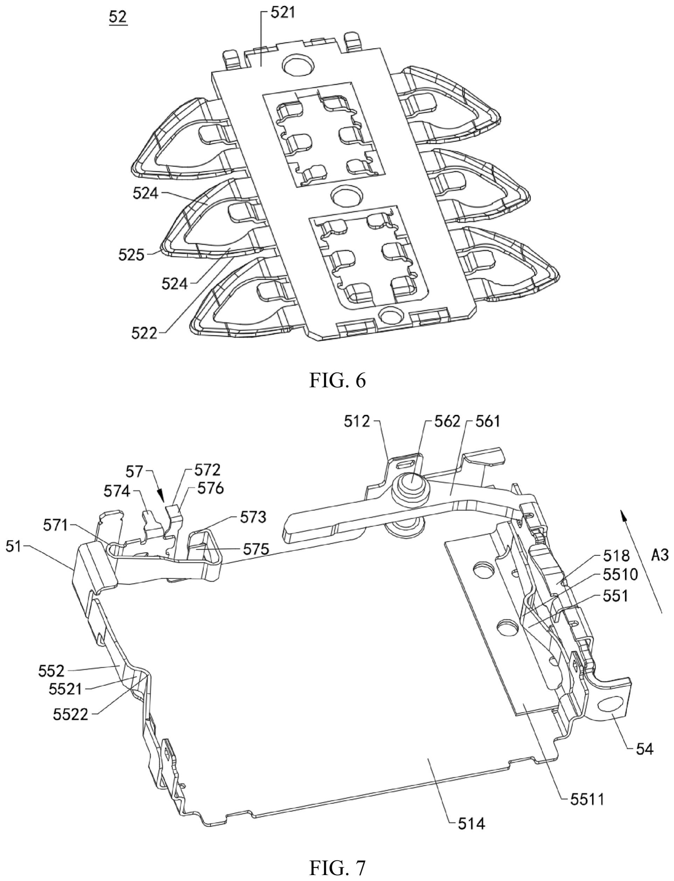

FIG. 5 is a diagram of a structure of a terminal 522 shown in FIG. 4, and FIG. 6 is a diagram of a structure of a card connector 52 shown in FIG. 4. It should be noted that the terminal 522 in FIG. 5 and the terminal 522 in FIG. 6 are viewed at different angles of view. The terminal 522 in FIG. 5 is viewed at an angle of view of the terminal 522 facing a side of the electronic card 60, and the terminal 522 in FIG. 6 is viewed at an angle of view of the terminal 522 away from a side of the electronic card 60. The terminal 522 may include a fastening portion 523, at least two spring arms 524, and a contact portion 525. The fastening portion 523 is fastened to the insulating member 521. The contact portion 525 is spaced apart from the fastening portion 523, so that a gap is provided between the contact portion 525 and the fastening portion 523, or another structure may be provided between the contact portion 525 and the fastening portion 523. The at least two spring arms 524 are located on a same side of the contact portion 525 and are spaced apart, and each spring arm 524 is fastened between the fastening portion 523 and the contact portion 525. The contact portion 525 protrudes relative to a surface of the insulating member 521 in an elastic manner. It may be understood that when the card tray 53 is located within the housing 51, the contact portion 525 is disposed in correspondence to a card slot 531, and the contact portion 525 is configured to contact the electronic card 60 in the card slot 531 and be electrically connected to the electronic card 60. That the contact portion 525 is disposed in correspondence to the card slot 531 may be understood as that when the card tray 53 is located within the housing 51, a projection of the contact portion 525 on a plane on which the card tray 53 lies is located within the card slot 531.

It may be understood that there may be two, three, four, five, or more spring arms 524, and a plurality of spring arms 524 are disposed side by side on a same side of the contact portion 525. In an embodiment of the present disclosure, structural strength and stability of the terminal 522 can be enhanced by increasing a quantity of spring arms 524, which facilitates a stable electrical connection between the terminal 522 and the electronic card 60.

In some embodiments, arrangement directions of the at least two spring arms 524 are set at included angles with an arrangement direction of the fastening portion 523 and the contact portion 525, so that a miniaturization design of the overall terminal 522 can be implemented, the terminal 522 is prevented from occupying excessively large space of the card socket 50, and miniaturization of the card socket 50 is facilitated. For example, the arrangement directions of the at least two spring arms 524 may be perpendicular to the arrangement direction of the fastening portion 523 and the contact portion 525.

In some embodiments, the fastening portion 523, the at least two spring arms 524, and the contact portion 525 may integrally form a triangular shape. The triangular terminal 522 has high structural stability, which helps improve reliability of the electrical connection between the terminal 522 and the electronic card 60.

With reference to FIG. 1, FIG. 5, and FIG. 6, the terminal 522 may further include a welding portion 526, one end of the welding portion 526 is fastened to the fastening portion 523, and another end of the welding portion 526 may be welded to the circuit board 40. When the card socket 50 is installed on the circuit board 40, the card connector 52 is located between the housing 51 and the circuit board 40, and the welding portion 526 is welded to the circuit board 40, to implement a fastened connection and an electrical connection between the card connector 52 and the circuit board 40. It may be understood that the welding portion 526 may be located between two adjacent spring arms 524, so that structural space of the terminal 522 is fully and properly used, which facilitates miniaturization of the terminal 522. It may be understood that the terminal 522 may be of an integrally formed structure, which is conducive to simplifying a manufacturing process and provides high structural strength. In another embodiment, a plurality of mechanical parts of the terminal 522 may alternatively be of a separate structure and are fastened through assembly to form the terminal 522.

With reference to FIG. 3, FIG. 5, and FIG. 6, a main body portion 527 of the terminal 522 includes the at least two spring arms 524 and the contact portion 525. The main body portion 527 protrudes relative to a surface of the fastening portion 523. The main body portion 527 includes an outer side edge 5271 and an inner side edge 5272. The outer side edge 5271 is bent relative to the inner side edge 5272 and toward a direction opposite to a protruding direction of the main body portion 527. In an embodiment of the present disclosure, the outer side edge 5271 is bent relative to the inner side edge 5272 and toward the direction opposite to the protruding direction of the main body portion 527, to avoid damaging the electronic card 60 by the outer side edge 5271 of the terminal 522 during insertion or removal of the electronic card 60. It may be understood that in some embodiments, a surface that is of the main body portion 527 and that faces the electronic card 60 may be a smooth curved surface, to prevent the terminal 522 from damaging the electronic card 60.

With reference to FIG. 2 to FIG. 4, the card tray 53 may be located within the first slot 517, or may be removed from the first slot 517. The card tray 53 is provided with the card slot 531, and the electronic card 60 may be installed in the card slot 531. The electronic card 60 may be approximately rectangular, and the electronic card 60 may include a long side 61 and a short side 62. An extension direction of a short side 5311 of the card slot 531 is the same as an insertion direction A3 of the card tray 53, so that an extension direction of the short side 62 of the electronic card 60 is the same as the insertion direction A3 of the card tray 53, and the electronic card 60 can be horizontally inserted into the card socket 50. That the electronic card 60 can be horizontally inserted into the card socket 50 may be understood as that in a process in which the electronic card 60 is inserted into the card socket 50, the extension direction of the short side 62 of the electronic card 60 is the same as the insertion direction A3 of the card tray 53. The electronic card 60 is horizontally inserted into the card socket 50, so that a size of the card socket 50 in the insertion direction A3 is reduced, miniaturization of the overall card socket 50 is facilitated, space occupied by the card socket 50 in the electronic device 100 is reduced. In this way, sufficient space for disposing the battery 30 and the like is reserved, and space utilization of the electronic device 100 is improved.

With reference to FIG. 2 to FIG. 4, the clamping mechanism 55 includes a first clamping member 551 and a second clamping member 552 that are disposed opposite to each other along a first direction A1. The first direction A1 is set at an included angle with the insertion direction A3. For example, the first direction A1 may be perpendicular to the insertion direction A3. When the card tray 53 is located within the housing 51, the card tray 53 is located between the first clamping member 551 and the second clamping member 552. The first clamping member 551 and the second clamping member 552 are configured to clamp the card tray 53. When the card tray 53 is removed from the card socket 50, clamping force of the first clamping member 551 and the second clamping member 552 on the card tray 53 needs to be overcome. When the card socket 53 is inserted into the card socket 50, the first clamping member 551 and the second clamping member 552 generate the clamping force on the card tray 53 until the card tray 53 moves to a preset position in the card socket 50, and the card tray 53 is stably disposed in the card socket 50 through the first clamping member 551 and the second clamping member 552.

The first clamping member 551 and the housing 51 may be of a separate structure, and the first clamping member 551 is fastened to the housing 51 through assembly. For example, the first clamping member 551 may be fastened to the housing 51 through welding, adhesive, or the like.

In some embodiments, a size of the second clamping member 552 in the insertion direction A3 may be the same as a size of the first clamping member 551 in the insertion direction A3, to ensure that even clamping force is applied to two sides of the card tray 53, and avoid instability of the card tray 53 in the card socket 50 caused by uneven force on the two sides of the card tray 53. The size of the second clamping member 552 is not limited by a structure that is on the housing 51 and that is used to connect a push rod 54, and the size is highly flexible. In another embodiment, the size of the second clamping member 552 in the insertion direction A3 may alternatively be different from the size of the first clamping member 551 in the insertion direction A3. This is not limited in embodiments of the present disclosure.

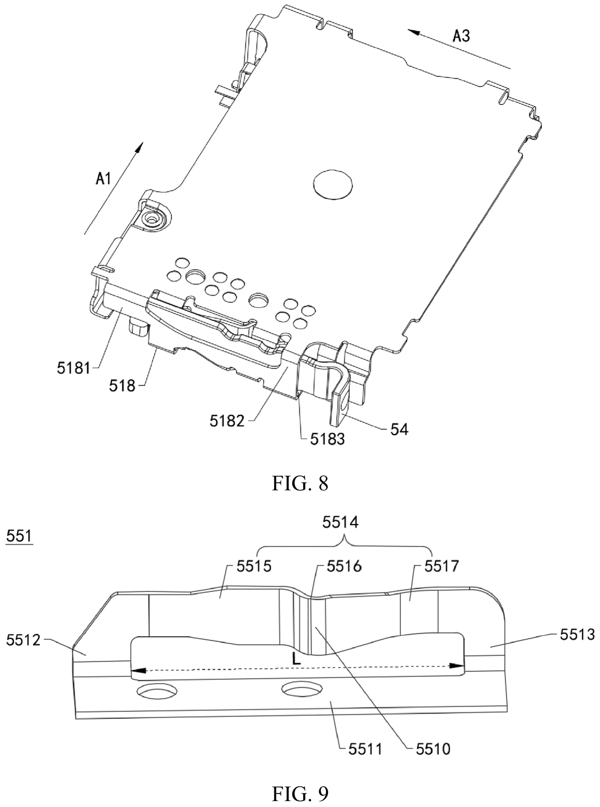

It may be understood that when the electronic card 60 can be horizontally inserted into the card socket 50, a size of the housing 51 in the insertion direction A3 is small, to be specific, sizes of the first side portion 511 and the third side portion 513 in the insertion direction A3 are small (where it may be understood that the sizes of the first side portion 511 and the third side portion 513 in the insertion direction A3 are less than a size of the second side portion 512 in the first direction A1). As a result, the size of the first clamping member 551 and the size of the second clamping member 552 in the insertion direction A3 are small. If the first clamping member 551 is integrally formed with the housing 51, the size of the first clamping member 551 is limited by a structure (with reference to a bending portion 518 shown in FIG. 7 and FIG. 8) that is on the housing 51 and that is used to connect the push rod 54, and the size is difficult to be large. Excessively small sizes of the first clamping member 551 and the second clamping member 552 in the insertion direction A3 lead to excessive clamping force of the first clamping member 551 and the second clamping member 552 on the card tray 53. As a result, it is difficult to push the card tray 53 into the housing 51, or it is difficult to remove the card tray 53 from the housing 51. In addition, in a process in which the card tray 53 is removed from or inserted into the card socket 50, the first clamping member 551 and the second clamping member 552 deform. Excessively small sizes of the first clamping member 551 and the second clamping member 552 lead to severe material wear of the first clamping member 551 and the second clamping member 552 during repeated removal or insertion of the card tray 53. As a result, life spans of the first clamping member 551 and the second clamping member 552 are reduced.

FIG. 7 is a diagram of a part of a structure of the card socket 50 shown in FIG. 4, and FIG. 8 is a diagram of the part of the structure of the card socket shown in FIG. 7 from another perspective. The housing 51 is provided with the bending portion 518, and the bending portion 518 may be a part of the third side portion 513. The bending portion 518 is configured to form a track 5183 that allows the push rod 54 to slide, in other words, the push rod 54 may slide along the insertion direction A3 in space of the bending portion 518. The bending portion 518 can limit the push rod 54 in the first direction A1, to prevent the push rod 54 from moving in the first direction A1, and improve structural stability of the card socket 50.

In some embodiments, the bending portion 518 may include a first end portion 5181 and a second end portion 5182 that are arranged along the insertion direction A3, the first end portion 5181 is spaced apart from the second end portion 5182, and there is a hollow between the first end portion part 5181 and the second end portion 5182. If the first clamping member 551 is integrally formed with the housing 51, two ends of the first clamping member 551 are limited by space between the first end portion 5181 and the second end portion 5182, and the size of the first clamping member 551 in the insertion direction A3 is difficult to be large, and is usually small. In an embodiment of the present disclosure, the first clamping member 551 and the housing 51 are of a separate structure, the size of the first clamping member 551 is not limited by the bending portion 518, and the size of the first clamping member 551 in the insertion direction A3 is set with high flexibility, and may be set as required. In another embodiment, there may alternatively be no hollow between the first end portion 5181 and the second end portion 5182, and the first end portion 5181 and the second end portion 5182 are integrally connected.

In an embodiment of the present disclosure, the first clamping member 551 and the housing 51 are of a separate structure. The size of the first clamping member 551 is not limited by the structure that is on the housing 51 and that is used to connect the push rod 54. A size, a thickness, a material, a position, and the like of the first clamping member 551 are set with high flexibility. The size of the first clamping member 551 in the insertion direction A3 may be long. This prevents the first clamping member 551 from exerting excessive clamping force on the card tray 53 due to an overly small size of the first clamping member 551, where the excessive clamping force would make the card tray 53 difficult to move, and avoids severe material wear of the first clamping member 551. In an embodiment of the present disclosure, the electronic card 60 can be horizontally inserted into the card socket 50, so that a size of the card socket 50 in the insertion direction A3 is reduced, miniaturization of the overall card socket 50 is facilitated, and space utilization of the electronic device 100 is improved. In an embodiment of the present disclosure, the arrangement directions of the at least two spring arms 524 are set at included angles with the arrangement direction of the fastening portion 523 and the contact portion 525, so that a miniaturization design of the terminal 522 can be implemented, the terminal 522 is prevented from occupying excessively large space of the card socket 50, and miniaturization of the card socket 50 is facilitated. In an embodiment of the present disclosure, there are at least two spring arms 524, so that structural stability of the terminal 522 can be enhanced, and reliability of an electrical connection between the terminal 522 and the electronic card 60 is improved.

With reference to FIG. 4, in an embodiment of the present disclosure, an example in which the electronic card 60 is provided with six chip pins 63 is used. There are six terminals 522, and each terminal 522 is electrically connected to one chip pin 63. In another embodiment, there may also be four, eight, or nine chip pins 63 of the electronic card 60, or there may be another quantity of chip pins. This is not limited in embodiments of the present disclosure. It may be understood that a quantity of terminals 522 may be adjusted based on a quantity of chip pins 63 of the electronic card 60, and the quantity of terminals 522 may be consistent with the quantity of chip pins 63.

With reference to FIG. 3 and FIG. 7, the card socket 50 may include a detection mechanism 57, and the detection mechanism 57 is configured to detect whether the card tray 53 is inserted. For example, the detection mechanism 57 may include an elastic member 571 and a mating member 572. The elastic member 571 includes a first end 573 and a second end 574. The mating member 572 includes a third end 575 and a fourth end 576. In a process in which the card tray 53 is inserted into the housing 51, the card tray 53 compresses the elastic member 571, and the first end 573 is separated from the third end 575. It is determined, by detecting that an electrical signal between the second end 574 and the fourth end 576 is disconnected, that the card tray 53 is inserted. In a process in which the card tray 53 is removed from the housing 51, the elastic member 571 recovers from deformation, and the first end 573 contacts the third end 575. It is determined, by detecting that an electrical signal between the second end portion 574 and the fourth end 576 is short-circuited, that the card tray 53 is removed.

With reference to FIG. 2 to FIG. 4, the card socket 50 may include the push rod 54, the push rod 54 may be slidably connected to the housing 51, and the push rod 54 is configured to push the card tray 53 out of the housing 51. It may be understood that the push rod 54 may move back and forth along the insertion direction A3. When the card tray 53 is located within the housing 51, the first clamping member 551 and the push rod 54 are located on a same side of the card tray 53, and the first clamping member 551 is located on a side that is of the push rod 54 and that faces the card tray 53. Because the first clamping member 551 and the push rod 54 are located on the same side of the card tray 53, if the first clamping member 551 is integrally formed with the housing 51, the size of the first clamping member 551 is further limited by the structure that is on the housing 51 and that is used to connect the push rod 54, and the size is difficult to be large. In an embodiment of the present disclosure, the first clamping member 551 and the housing 51 are of a separate structure. The size of the first clamping member 551 is not limited by the structure that is on the housing 51 and that is used to connect the push rod 54, and the size of the first clamping member 551 in the insertion direction A3 may be long. This prevents the first clamping member 551 from exerting excessive clamping force of the first clamping member 551 on the card tray 53, where the excessive clamping force would make the card tray 53 difficult to move, and avoids severe material wear of the first clamping member 551.

For example, the card socket 50 may include a joystick 561 and a rotating shaft 562. The rotating shaft 562 is fastened to the bottom plate 514 of the housing 51, and the joystick 561 is rotatably connected to the rotating shaft 562. When the push rod 54 moves along the insertion direction A3 and approaches the second side portion 512, the push rod 54 acts on one end of the joystick 561 and pushes the joystick 561 to rotate along the rotating shaft 562, and another end of the joystick 561 acts on the card tray 53, causing the card tray 53 to be removed from the housing 51. When the card tray 53 is inserted into the housing 51, the card tray 53 acts on one end of the joystick 561, the joystick 561 rotates along the rotating shaft 562, and another end of the joystick 561 pushes the push rod 54 to move toward a direction away from the second side portion 512.

It may be understood that the second clamping member 552 and the housing 51 may be of an integrally formed structure, and do not need to be fastened. This helps simplify a process, and also helps improve structural strength and stability of the second clamping member 552 and the housing 51. In another embodiment, the second clamping member 552 and the housing 51 may alternatively be of a separate structure, and the second clamping member 552 may be fastened to the housing 51 through welding, adhesive, or the like. In an embodiment of the present disclosure, the second clamping member 552 and the housing 51 are of a separate structure, so that a size, a thickness, a material, and the like of the second clamping member 552 are set with high flexibility.

With reference to FIG. 4, FIG. 7, and FIG. 9, FIG. 9 is a diagram of a structure of the first clamping member 551 shown in FIG. 7. The first clamping member 551 may include an installation portion 5511, a first connection portion 5512, a second connection portion 5513, and a clamping portion 5514. The installation portion 5511 is spaced apart from the clamping portion 5514. The installation portion 5511 is fastened to the bottom plate 514 of the housing 51 through assembly. The clamping portion 5514 is configured to clamp the card tray 53. It may be understood that when the card tray 53 is located within the first slot 517, the installation portion 5511 is located between the card tray 53 and the bottom plate 514, and the clamping portion 5514 is located on a side portion of the card tray 53. The first connection portion 5512 is connected to one end of the installation portion 5511 and one end of the clamping portion 5514, and the second connection portion 5513 is connected to another end of the installation portion 5511 and another end of the clamping portion 5514.

In some embodiments, a distance L between the first connection portion 5512 and the second connection portion 5513 is greater than or equal to 4 mm. In an embodiment of the present disclosure, the distance L between the first connection portion 5512 and the second connection portion 5513 is greater than or equal to 4 mm, so that the size of the first clamping member 551 in the insertion direction A3 can be ensured. This prevents the first clamping member 551 from exerting excessive clamping force on the card tray 53 due to an overly small size of the first clamping member 551 in the insertion direction A3, where the excessive clamping force would make the card tray 53 difficult to remove from the first slot 517 or insert into the first slot 517. In addition, the distance L between the first connection portion 5512 and the second connection portion 5513 is greater than or equal to 4 mm, avoiding severe material wear of the first clamping member 551 during repeated removal or insertion of the card tray 53 due to the overly small size of the first clamping member 551, thereby avoiding reducing a life span of the first clamping member 551. For example, the distance L between the first connection portion 5512 and the second connection portion 5513 may be 4.5 mm, 5 mm, 5.5 mm, 6 mm, 6.5 mm, 7 mm, 8 mm, or the like, which may be specifically set as required.

In some embodiments, the installation portion 5511 is bent relative to the clamping portion 5514 and toward one side of the clamping portion 5514, so that space occupied by the first clamping member 551 on a thickness of the card socket 50 is reduced, and miniaturization of the card socket 50 is facilitated.

It may be understood that in some embodiments, a groove may be provided on the bottom plate 514, and the installation portion 5511 is fastened to the groove on the bottom plate 514, to avoid imbalance between two sides of the card tray 53 caused by the installation portion 5511 of the first clamping member 551 protruding from a surface of the bottom plate 514.

With reference to FIG. 4 and FIG. 9, in some embodiments, the clamping portion 5514 may include a first spring connection arm 5515, a spring connection segment 5516, and a second spring connection arm 5517 that are connected in sequence. The spring connection segment 5516 protrudes from surfaces of the first spring connection arm 5515 and the second spring connection arm 5517. The spring connection segment 5516 may contact the card tray 53. In a process in which the card tray 53 is inserted into or removed from the first slot 517, the spring connection segment 5516 contacts the card tray 53 and compresses the card tray 53, the first spring connection arm 5515 and the second spring connection arm 5517 may deform, and the first clamping member 551 generates clamping force on the card tray 53.

With reference to FIG. 8 and FIG. 9, in some embodiments, when there is a hollow between the first end portion 5181 and the second end portion 5182, a surface that is of the first connection portion 5512 and that faces the second connection portion 5513 may be flush with a surface that is of the first end portion 5181 and that faces the second end portion 5182, or a surface that is of the second connection portion 5513 and that faces the first connection portion 5512 is flush with a surface that is of the second end portion 5182 and that faces the first end portion 5181, or a surface that is of the first connection portion 5512 and that faces the second connection portion 5513 may be flush with a surface that is of the first end portion 5181 and that faces the second end portion 5182 and a surface that is of the second connection portion 5513 and that faces the first connection portion 5512 is flush with a surface that is of the second end portion 5182 and that faces the first end portion 5181. It may be understood that the first clamping member 551 and the housing 51 are of a separate structure, and the size of the first clamping member 551 is not limited by the structure (the bending portion 518) that is on the housing 51 and that is used to connect the push rod. In an embodiment of the present disclosure, the surface that is of the first connection portion 5512 and that faces the second connection portion 5513 may be flush with the surface that is of the first end portion 5181 and that faces the second end portion 5182, or the surface that is of the second connection portion 5513 and that faces the first connection portion 5512 is flush with the surface that is of the second end portion 5182 and that faces the first end portion 5181, to ensure that the size of the first clamping member 551 in the insertion direction A3 can be large.

With reference to FIG. 4, FIG. 7, and FIG. 9, a contact part between the clamping portion 5521 of the second clamping member 552 and the card tray 53 is a second part 5522, and a contact part between the clamping portion 5514 of the first clamping member 551 and the card tray 53 is a first part 5510, and the first part 5510 is located within the spring connection segment 5516. A direction of a connection line between the first part 5510 and the second part 5522 is parallel to a direction of a long side of the card slot 531. It may be understood that the first part 5510 and the second part 5522 may be symmetrically distributed on two opposite sides of the card tray 53. In an embodiment of the present disclosure, the direction of the connection line between the first part 5510 and the second part 5522 is parallel to the direction of the long side of the card slot 531, to ensure that even clamping force is applied to two sides of the card tray 53, and avoid instability of the card tray 53 in the card socket 50 caused by uneven force on the two sides of the card tray 53.

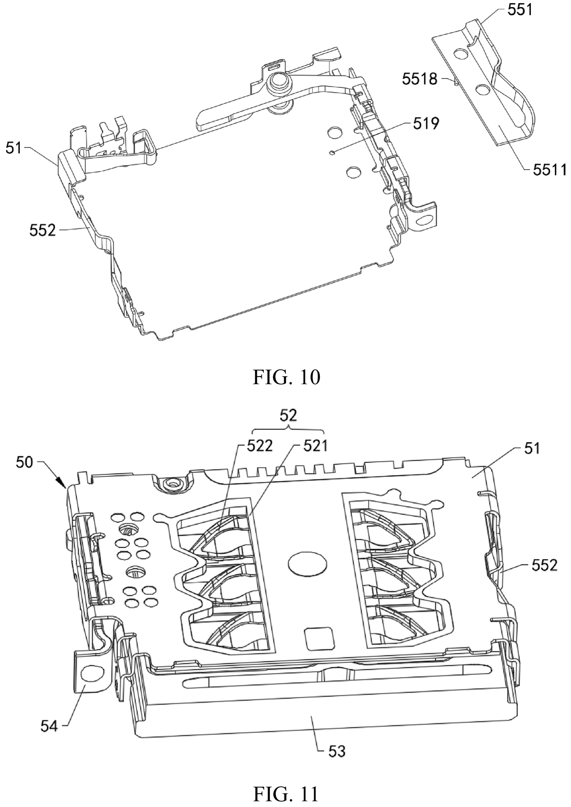

FIG. 10 is a diagram of an exploded structure of the part of the card socket 50 shown in FIG. 7. The installation portion 5511 of the first clamping member 551 is provided with a first positioning portion 5518, and the housing 51 is provided with a second positioning portion 519. The first positioning portion 5518 and the second positioning portion 519 cooperate with each other, to implement positioning of the first clamping member 551 and the housing 51, so that the first clamping member 551 is quickly and accurately fastened to the housing 51.

In some embodiments, there may be one first positioning portion 5518 or a plurality of first positioning portions 5518, and there may also be one second positioning portion 519 or a plurality of second positioning portions 519, where a plurality of may be understood as two or more. In FIG. 10, an example in which there is one first positioning portion 5518, and there is one second positioning portion 519 is used. When there are a plurality of first positioning portions 5518, the plurality of first positioning portions 5518 are spaced apart. The plurality of first positioning portions 5518 may be of structures with different sizes or shapes, to implement positioning of the first clamping member 551 and the housing 51, so as to avoid an error generated during the positioning of the first clamping member 551 and the housing 51, and facilitate direct and accurate positioning.

With reference to FIG. 10, in some embodiments, the first positioning portion 5518 may be a protrusion, the second positioning portion 519 may be an opening, and the protrusion is located within the opening to implement positioning of the first clamping member 551 and the housing 51, so that the first clamping member 551 is quickly and accurately fastened to the housing 51. It may be understood that the protrusion may be a protruding point, a protruding post, a conical protrusion, or the like. It may be understood that the second positioning portion 519 may alternatively be a groove.

In another embodiment, the first positioning portion 5518 may be an opening, and the second positioning portion 519 may be a protrusion. The protrusion is located within the opening to implement positioning of the first clamping member 551 and the housing 51, so that the first clamping member 551 is quickly and accurately fastened to the housing 51. It may be understood that the protrusion may be a protruding point, a protruding post, a conical protrusion, or the like. It may be understood that the first positioning portion 5518 may alternatively be a groove.

In some embodiments, a cross section of the protrusion that is perpendicular to a protrusion direction is of an asymmetric structure, for example, a polygon with unequal side lengths, so that the first clamping member 551 can be connected to the housing 51 only at a fixed angle, to avoid inaccurate positioning.

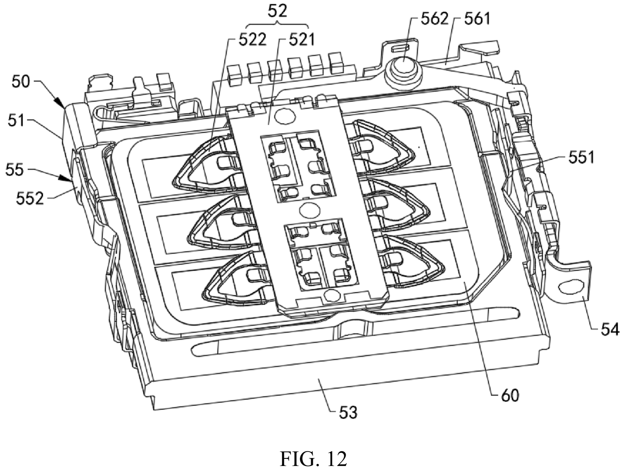

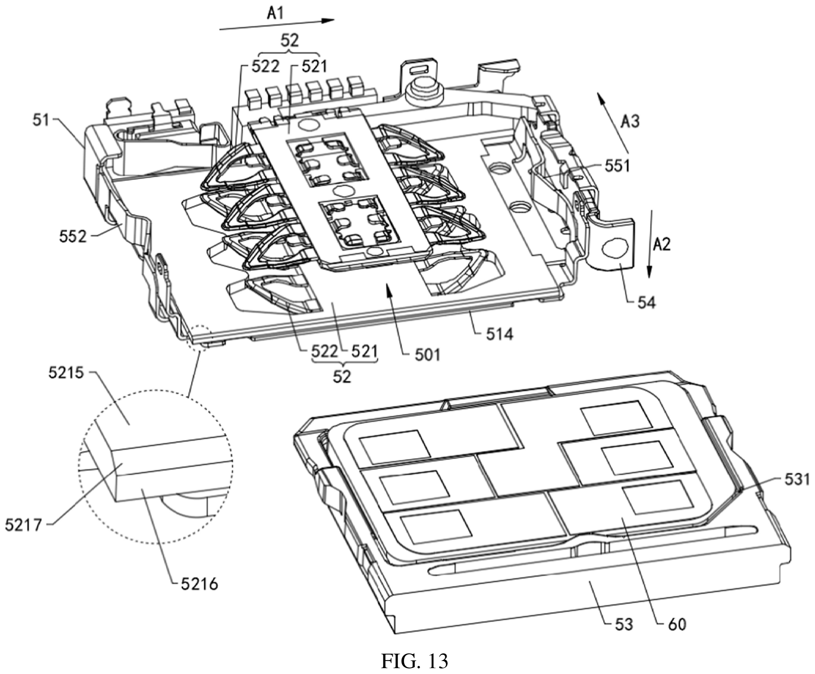

In combination with the embodiments shown in FIG. 2 and FIG. 3, FIG. 11 is a diagram of another structure of a card socket 50 and an electronic card 60, FIG. 12 is a diagram of the structure of the card socket 50 and the electronic card 60 shown in FIG. 11 from another perspective, and FIG. 13 is a diagram of an exploded structure of the card socket 50 and the electronic card 60 shown in FIG. 12.

In an embodiment of the present disclosure, there may be two card connectors 52, and the two card connectors 52 are disposed opposite to each other and spaced apart along the second direction A2 to form a slot 501. To be distinguished from the first slot 517, the slot 501 between the two card connectors 52 is referred to as a second slot 501. The second direction A2 may be set at an included angle with the insertion direction A3 and may be set at an included angle with the first direction A1. For example, the second direction A2 is perpendicular to the insertion direction A3 and is perpendicular to the first direction A1.

One of the card connectors 52 is fastened to the bottom plate 514 of the housing 51, and the other card connector 52 is spaced apart from the bottom plate 514 of the housing 51. For example, an insulating member 521 of one of the card connectors 52 is fastened to the bottom plate 514 of the housing 51. Terminals of the two card connectors 52 protrude toward the second slot 501.

With reference to FIG. 13, the insulating member 521 fastened to the bottom plate 514 includes a surface 5215, a side surface 5216, and a guide surface 5217. The guide surface 5217 is connected between the side surface 5216 and the surface 5215. The guide surface 5217 allows for insertion of the card tray 53 and plays a guiding role in the insertion of the card tray 53, facilitating quick and accurate insertion of the card tray 53. The guide surface 5217 may be a flat surface or a curved surface. This is not limited in this embodiment of the present disclosure.

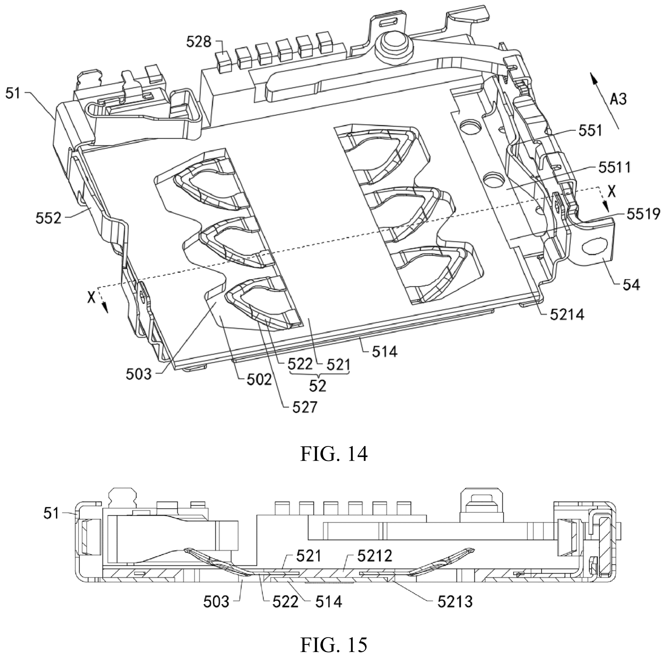

FIG. 14 is a diagram of a part of a structure of the card socket 50 shown in FIG. 12, and FIG. 15 is a sectional view of the part of the structure of the card socket 50 shown in FIG. 14 at an X-X position. The housing 51 may be made of a metal material. The housing 51 made of the metal material can have a shielding function, and the housing 51 made of the metal material can conduct electricity. The insulating member 521 is partially disposed between terminals 522 of the card connector 52 fastened to the bottom plate 514 and the bottom plate 514.

In some embodiments, in a process of forming the insulating member 521 through injection molding, the terminals 522 and the housing 51 are used as inserts, and are integrally formed with the insulating member 521. It may be understood that the terminals 522 of the card connector 52 fastened to the housing 51, the insulating member 521, and the housing 51 are formed into an integral mechanical part through an insert molding process. For example, the housing 51 may be integrally formed through an injection molding process, and the first clamping member 551 is fastened to the housing 51. The terminals 522 may also be integrally formed through an injection molding process. The manufactured housing 51 and the terminals 522 are placed in a mold as inserts, plastic, melted into liquid at high temperature, is then injected into the mold, and the plastic cools down to form the insulating member 521. It may be understood that in a process in which the plastic cools down to form the insulating member 521, the housing 51 is fastened to the terminals 522 through the insulating member 521. In another embodiment, the housing 51 and the terminals 522 may alternatively be manufactured through another process. This is not limited in this embodiment of the present disclosure.

In an embodiment of the present disclosure, the terminals 522 of the card connector 52 fastened to the housing 51, the insulating member 521, and the housing 51 are formed into an integral mechanical part through the insert molding process. This simplifies an assembly process of the insulating member 521, the terminals 522, and the housing 51, improves connection strength between the insulating member 521, the terminals 522, and the housing 51, and enhances structural stability of the card socket 50. In addition, if the insulating member 521 and the housing 51 are of a separate structure and are fastened through assembly such as adhesive or welding, there is a gap between the insulating member 521 and the housing 51, and dust or other impurities may enter the gap. In an embodiment of the present disclosure, the terminals 522 of the card connector 52 fastened to the housing 51, the insulating member 521, and the housing 51 are formed into the integral mechanical part through the insert molding process, so that there is no gap between the insulating member 521 and the housing 51, to avoid a foreign matter between the insulating member 521 and the housing 51.

With reference to FIG. 13, there are two electronic cards 60, and the two electronic cards 60 may be arranged along the second direction A2 and spaced apart in the card tray 53. For example, the card tray 53 includes two card slots 531 arranged in the second direction A2, and the two electronic cards 60 are respectively placed in the two card slots 531. The card tray 53 is removable from or insertable into the second slot 501. Both the two electronic cards 60 can be horizontally inserted into the card socket 50. It should be noted that in an angle state of the structure shown in FIG. 13, one electronic card 60 and one card slot 531 may be shown. It may be understood that another side of the card tray 53 is also provided with one electronic card 60 and one card slot 531, which are not shown in FIG. 13.

When the card tray 53 is located within the second slot 501, terminals 522 of one of the card connectors 52 are disposed in correspondence to one of the card slots 531, and terminals 522 of the other card connector 52 are disposed in correspondence to the other card slot 531, so that the terminals 522 of the one of the card connectors 52 are electrically connected to one electronic card 60, and the terminals 522 of the other card connector 52 are electrically connected to the other electronic card 60. The two electronic cards 60 can operate separately and do not interfere with each other.

In some embodiments, the card tray 53 is provided with a bearing plate (not shown in FIG. 13), and the two electronic cards 60 are respectively located on two opposite sides of the bearing plate. The bearing plate needs to be rigid enough to bear the two electronic cards 60.

In an embodiment of the present disclosure, there are two disposed card connectors 52, and there are two electronic cards 60. The two electronic cards 60 are arranged in a stacked manner in the second direction A2, and are horizontally inserted into the card socket 50. This helps reduce an overall size of the card socket 50, prevents the card socket 50 and the electronic card 60 from occupying excessively large space in the electronic device 100, and improves integration of the electronic device 100.

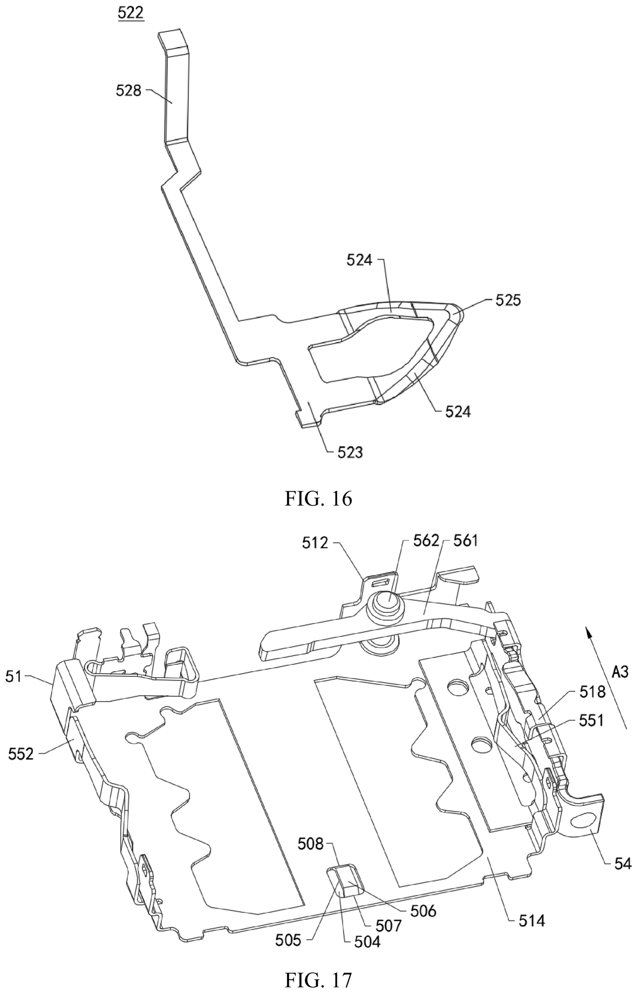

In some embodiments, with reference to FIG. 13, FIG. 14, and FIG. 16, FIG. 16 is a diagram of another structure of a terminal 522. The terminal 522 in FIG. 16 is the terminal 522 of the card connector 52 fastened to the housing 51. The terminal 522 of the card connector 52 fastened to the housing 51 includes a pin 528. One end of the pin 528 is fastened to the fastening portion 523, and another end of the pin 528 extends out of the insulating member 521 and is fastened to the circuit board 40. The pin 528 is electrically connected to the circuit board 40. In FIG. 14, an example in which there are six terminals 522 of the card connector 52 fastened to the housing 51, and there are also six pins 528 is used. In another embodiment, there may be four, eight, or nine terminals 522, or there may be another quantity of terminals. This is not limited in embodiments of the present disclosure.

With reference to FIG. 14, the housing 51 may be provided with a hollow region 502, and the hollow region 502 is a hollow area. A main body portion 527 of the terminal 522 is disposed in correspondence to the hollow region 502. That the main body portion 527 of the terminal 522 is disposed in correspondence to the hollow region 502 may be understood as that a projection of the main body portion 527 of the terminal 522 on a plane on which the bottom plate 514 of the housing 51 lies is located within the hollow region 502. It may be understood that the insulating member 521 is provided with a hollow area corresponding to the hollow region 502, and the hollow area is for accommodating the main body portion 527 of the terminal 522.

It may be understood that in a process in which the card tray 53 is inserted into the housing 51, the card tray 53 exerts, in a direction toward the bottom plate 514, action force on the terminal 522 of the card connector 52 fastened to the housing 51, the main body portion 527 of the terminal 522 deforms and approaches the bottom plate 514, and a short circuit is caused by contact between the main body portion 527 of the terminal 522 and the housing 51 made of a metal material. In an embodiment of the present disclosure, the hollow region 502 is provided, so that when the terminal 522 is subjected to the action force in the direction toward the bottom plate 514, the terminal 522 does not contact the bottom plate 514 of the housing 51, to avoid the contact between the terminal 522 and the housing 51 when the card tray 53 is inserted. In addition, the hollow region 502 is provided to reduce a weight of the housing 51, which facilitates a lightweight design of the card socket 50.

In some embodiments, with reference to FIG. 14, hollow regions corresponding to three terminals 522 that are disposed side by side along the insertion direction A3 may be communicated, which facilitates lightweight of the card socket 50.

With reference to FIG. 14 and FIG. 15, the bottom plate 514 of the housing 51 is provided with a reinforcement hole 503. The insulating member 521 of the card connector 52 fastened to the bottom plate 514 includes an insulating body 5212 and an extension portion 5213, the insulating body 5212 is fastened to the surface of the bottom plate 514, and the extension portion 5213 is embedded into an inner wall of the reinforcement hole 503. In an embodiment of the present disclosure, the extension portion 5213 is embedded into the inner wall of the reinforcement hole 503, so that the insulating member 521 is reliably connected to the housing 51. In another embodiment, the housing 51 may be provided with a reinforcement slot, and the extension portion 5213 is located within the reinforcement slot.

In an embodiment of the present disclosure, the hollow region 502 and the reinforcement hole 503 may be of a same structure. In another embodiment of the present disclosure, the hollow region 502 and the reinforcement hole 503 may alternatively be of different structures.

With reference to FIG. 14, the insulating member 521 of the card connector 52 fastened to the bottom plate 514 is provided with a recess portion 5214, the installation portion 5511 of the first clamping member 551 is provided with a raised portion 5519, and the raised portion 5519 is located within the recess portion 5214. It may be understood that during insertion or removal of the card tray 53, the first clamping member 551 is subject to force of the card tray 53 on the first clamping member 551 in the insertion direction A3. Therefore, due to insertions or removals of the card tray 53, connection strength between the first clamping member 551 and the housing 51 may be reduced, and the first clamping member 551 may be detached from the housing 51. In an embodiment of the present disclosure, the raised portion 5519 of the first clamping member 551 is located within the recess portion 5214 of the insulating member 521, so that the insulating member 521 can limit and support the first clamping member 551, to prevent the first clamping member 551 from being detached from the housing 51 due to insertions or removals of the card tray 53.

In another embodiment, the insulating member 521 of the card connector 52 fastened to the bottom plate 514 may be provided with a raised portion, the installation portion 5511 of the first clamping member 551 may be provided with a recess portion, and the raised portion is located within the recess portion.

In some embodiments, the installation portion 5511 of the first clamping member 551 may be located between the bottom plate 514 and the insulating member 521 of the card connector 52 fastened to the bottom plate 514, so that the insulating member 521 can limit and support the first clamping member 551, to prevent the first clamping member 551 from being detached from the housing 51 due to insertions or removals of the card tray 53.

With reference to FIG. 14 and FIG. 17, FIG. 17 is a diagram of a part of a structure of the card socket 50 shown in FIG. 13. The housing 51 is provided with a bridge 505, and the bridge 505 is located within the housing 51. The bridge 505 includes an embedded portion 506, a first end 507, and a second end 508. The first end 507 and the second end 508 are disposed opposite to each other, and both the first end 507 and the second end 508 are fastened to the bottom plate 514. The embedded portion 506 is located between the first end 507 and the second end 508. A gap is provided between the embedded portion 506 and the bottom plate 514, and the embedded portion 506 is embedded into the insulating member 521 of the card connector 52 fastened to the bottom plate 514. It may be understood that the embedded portion 506 is embedded into the insulating member 521 of the card connector 52 fastened to the bottom plate 514, which helps enhance connection strength between the insulating member 521 of the card connector 52 fastened to the bottom plate 514 and the housing 51, and improve connection reliability.

In some embodiments, the housing 51 may include a filling hole 504, both the first end 507 and the second end 508 are fastened to an edge of the filling hole 504, and the filling hole 504 is provided with a part of the insulating member 521.

In another embodiment, the card connector 52 may include eight terminals, and the eight terminals may include six triangular terminals 522 and two long-strip terminals, so that a SIM card and an NM card can be installed on the card socket 50. The long-strip terminal may include a contact portion and two fastening portions. The contact part is located between the two fastening portions. The two fastening portions are both fastened to the insulating member. For example, for the six triangular terminals 522, refer to the arrangement of the six triangular terminals 522 in FIG. 6. The two long-strip terminals are fastened to the insulating member 521 and located on a periphery of the six triangular terminals 522. The card connector 52 provided with the six triangular terminals 522 and the two long-strip terminals may be electrically connected to the NM card, and the eight terminals are electrically connected to eight chip pins on the NM card respectively. In another embodiment, the card connector 52 may alternatively include more than eight or less than eight terminals to correspond to chip pins of a corresponding NM card.

It may be understood that in an embodiment of the present disclosure, both the two electronic cards 60 may be SIM cards, or one electronic card 60 is a SIM card, and the other electronic card 60 is an NM card. The two electronic cards 60 may alternatively be electronic cards of another type. This is not limited in the present disclosure.

In an embodiment of the present disclosure, the electronic card 60 can be horizontally inserted into the card socket 50, so that a size of the card socket 50 in the insertion direction A3 is reduced, miniaturization of the overall card socket 50 is facilitated, and space utilization of the electronic device 100 is improved. In an embodiment of the present disclosure, there are at least two spring arms 524, so that structural stability of the terminal 522 can be enhanced, and reliability of an electrical connection between the terminal 522 and the electronic card 60 is improved. In an embodiment of the present disclosure, the first clamping member 551 and the housing 51 are of a separate structure. A size of the first clamping member 551 is not limited by the structure that is on the housing 51 and that is used to connect the push rod 54. The size of the first clamping member 551 in the insertion direction A3 may be long. This prevents the first clamping member 551 from exerting excessive clamping force on the card tray 53 due to an overly small size of the first clamping member 551, where the excessive clamping force would make the card tray 53 difficult to move, and avoids severe material wear of the first clamping member 551 caused by the excessive clamping force of the first clamping member 551 on the card tray 53.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A card socket (50), comprising a housing (51), a card connector (52), a card tray (53), and a clamping mechanism (55), wherein
the card tray (53) is insertable into or removable from the housing (51), the card tray (53) is provided with a card slot (531), and an extension direction of a short side (5311) of the card slot (531) is the same as an insertion direction (A3) of the card tray (53);
the card connector (52) is located within the housing (51), the card connector (52) comprises an insulating member (521) and terminals (522), the terminal (522) comprises a fastening portion (523), at least two spring arms (524), and a contact portion (525), the fastening portion (523) is fastened to the insulating member (521), the contact portion (525) is spaced apart from the fastening portion (523), the at least two spring arms (524) are fastened between the fastening portion (523) and the contact portion (525), and arrangement directions of the at least two spring arms (524) are set at included angles with an arrangement direction of the fastening portion (523) and the contact portion (525);
when the card tray (53) is located within the housing (51), the contact portion (525) is disposed in correspondence to the card slot (531); and
the clamping mechanism (55) comprises a first clamping member (551) and a second clamping member (552) that are disposed opposite to each other along a first direction (A1), the first direction (A1) is set at an included angle with the insertion direction (A3), and when the card tray (53) is inserted into the housing (51), the card tray (53) is located between the first clamping member (551) and the second clamping member (552), wherein the first clamping member (551) and the housing (51) are of a separate structure, and the first clamping member (551) is fastened to the housing (51) through assembly.

2. The card socket (50) according to claim 1, wherein the first clamping member (551) comprises an installation portion (5511), a first connection portion (5512), a second connection portion (5513), and a clamping portion (5514), the installation portion (5511) is spaced apart from the clamping portion (5514), the installation portion (5511) is fastened to the housing (51), the clamping portion (5514) is configured to clamp the card tray (53), the first connection portion (5512) is connected to one end of the installation portion (5511) and one end of the clamping portion (5514), the second connection portion (5513) is connected to another end of the installation portion (5511) and another end of the clamping portion (5514), and a distance between the first connection portion (5512) and the second connection portion (5513) is greater than or equal to 4 mm.

3. The card socket (50) according to claim 2, wherein the installation portion (5511) is bent relative to the clamping portion (5514) and toward one side of the clamping portion (5514).

4. The card socket (50) according to claim 2 or 3, wherein the installation portion (5511) is provided with a first positioning portion (5518), the housing (51) is provided with a second positioning portion (519), and the first positioning portion (5518) and the second positioning portion (519) cooperate with each other.

5. The card socket (50) according to any one of claims 1 to 4, wherein the card socket (50) comprises a push rod (54), the push rod (54) is slidably connected to the housing (51), and the push rod (54) is configured to push the card tray (53) out of the housing (51); and
when the card tray (53) is inserted into the housing (51), the first clamping member (551) and the push rod (54) are located on a same side of the card tray (53), and the first clamping member (551) is located on a side that is of the push rod (54) and that faces the card tray (53).

6. The card socket (50) according to claim 5, wherein the housing (51) comprises a bending portion (518), the push rod (54) is located within a track (5183) formed by the bending portion (518), the bending portion (518) comprises a first end portion (5181) and a second end portion (5182) that are disposed opposite to each other along the insertion direction (A3), and there is a hollow between the first end portion (5181) and the second end portion (5182); and
a surface that is of the first connection portion (5512) and that faces the second connection portion (5513) is flush with a surface that is of the first end portion (5181) and that faces the second end portion (5182), or a surface that is of the second connection portion (5513) and that faces the first connection portion (5512) is flush with a surface that is of the second end portion (5182) and that faces the first end portion (5181).

7. The card socket (50) according to any one of claims 1 to 6, wherein the second clamping member (552) and the housing (51) are of a separate structure, and the second clamping member (552) is fastened to the housing (51) through assembly.

8. The card socket (50) according to any one of claims 1 to 7, wherein a contact part between a clamping portion (5521) of the second clamping member (552) and the card tray (53) is a second part (5522), a contact part between the clamping portion (5514) of the first clamping member (551) and the card tray (53) is a first part (5510), and a direction of a connection line between the first part (5510) and the second part (5522) is parallel to a direction of a long side of the card slot (531).

9. The card socket (50) according to any one of claims 1 to 8, wherein a main body portion (527) of the terminal (522) comprises the at least two spring arms (524) and the contact portion (525), the main body portion (527) protrudes relative to a surface of the fastening portion (523), and an outer side edge (5271) of the main body portion (527) is bent toward a direction opposite to a protruding direction of the main body portion (527).

10. The card socket (50) according to any one of claims 1 to 9, wherein there are two card connectors (52), the two card connectors (52) are disposed opposite to each other and spaced apart along a second direction (A2) to form a slot (501), and the second direction (A2) is set at an included angle with the insertion direction (A3) and is set at an included angle with the first direction (Al);
there are two card slots (531), and the two card slots (531) are arranged along the second direction (A2); and
when the card tray (53) is located within the slot (501), the terminals (522) of one of the card connectors (52) are disposed in correspondence to one of the card slots (531), and the terminals (522) of the other card connector (52) are disposed in correspondence to the other card slot (531).

11. The card socket (50) according to claim 10, wherein the first clamping member (551) is fastened to a bottom plate (514) of the housing (51) through assembly, one of the card connectors (52) is fastened to the bottom plate (514), the insulating member (521) is partially disposed between the terminals (522) of the card connector (52) fastened to the bottom plate (514) and the bottom plate (514), and in a process of forming the insulating member (521) through injection molding, the terminals (522) and the housing (51) are used as inserts and are integrally formed with the insulating member (521).

12. The card socket (50) according to claim 11, wherein the insulating member (521) of the card connector (52) fastened to the bottom plate (514) is provided with a recess portion (5214), and the first clamping member (551) is provided with a raised portion (5519), or the insulating member (521) of the card connector (52) fastened to the bottom plate (514) is provided with a raised portion, and the first clamping member (551) is provided with a recess portion, wherein the raised portion (5519) is located within the recess portion (5214).

13. The card socket (50) according to claim 11, wherein the first clamping member (551) is partially located between the bottom plate (514) and the insulating member (521) of the card connector (52) fastened to the bottom plate (514).

14. The card socket (50) according to any one of claims 11 to 13, wherein the housing (51) is provided with a bridge (505), the bridge (505) comprises an embedded portion (506) and a first end (507) and a second end (508) that are disposed opposite to each other, and the embedded portion (506) is located between the first end (507) and the second end (508); and
the first end (507) and the second end (508) are both fastened to the bottom plate (514), a gap is provided between the embedded portion (506) and the bottom plate (514), and the embedded portion (506) is embedded into the insulating member (521) of the card connector (52) fastened to the bottom plate (514).

15. The card socket (50) according to any one of claims 11 to **14,** wherein the bottom plate (514) is provided with a reinforcement hole (503) or a reinforcement slot, the insulating member (521) of the card connector (52) fastened to the bottom plate (514) comprises an insulating body (5212) and an extension portion (5213), the insulating body (5212) is fastened to a surface of the bottom plate (514), and the extension portion (5213) is embedded into the reinforcement hole (503) or the reinforcement slot.

16. An electronic device (100), comprising a circuit board (40) and the card socket (50) according to any one of claims 1 to 15, wherein the card socket (50) is fastened to the circuit board (40), the card slot (531) is configured to install the electronic card (60), and the terminals (522) are electrically connected to the electronic card (60) and the circuit board (40).

17. The electronic device (100) according to claim 16, wherein the electronic device (100) comprises an enclosure (10), the circuit board (40) and the card socket (50) are both located within the enclosure (10), a short side of the enclosure (10) is provided with an opening, and the opening is for the card tray (53) to extend out of the enclosure (10).
